(19) Europäisches Patentamt
European Patent Office
Office européen des brevets

(11) **EP 3 251 420 B1**

(12) **EUROPEAN PATENT SPECIFICATION**

(45) Date of publication and mention
of the grant of the patent:
**02.09.2020 Bulletin 2020/36**

(21) Application number: **15879334.9**

(22) Date of filing: **27.01.2015**

(51) Int Cl.:
**H04W 48/20** (2009.01)     **H04B 7/06** (2006.01)

(86) International application number:
**PCT/CN2015/071637**

(87) International publication number:
**WO 2016/119123 (04.08.2016 Gazette 2016/31)**

(54) **METHOD AND USER EQUIPMENT FOR A SEARCH**

VERFAHREN UND BENUTZERVORRICHTUNG ZUR SUCHE

PROCÉDÉ ET ÉQUIPEMENT UTILISATEUR POUR UNE RECHERCHE DE NOEUD D'ACCÈS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.12.2017 Bulletin 2017/49**

(73) Proprietor: **Telefonaktiebolaget LM Ericsson
(publ)
164 83 Stockholm (SE)**

(72) Inventors:
• **LI, Gen
Beijing 100029 (CN)**
• **LIU, Jinhua
Beijing 100102 (CN)**

(74) Representative: **Zacco Sweden AB
Valhallavägen 117
Box 5581
114 85 Stockholm (SE)**

(56) References cited:
**WO-A1-2014/009250     WO-A2-2005/089362
CN-A- 101 193 387     CN-A- 101 622 887
US-A1- 2008 198 811     US-A1- 2014 112 220
US-B1- 6 850 502**

## Description

### TECHNICAL FIELD

The present disclosure generally relates to the technical field of wireless communications, and particularly, to a method used in a User Equipment (UE) for Access Node (AN) search and an associated UE.

### BACKGROUND

This section is intended to provide a background to the various embodiments of the technology described in this disclosure. The description in this section may include concepts that could be pursued, but are not necessarily ones that have been previously conceived or pursued. Therefore, unless otherwise indicated herein, what is described in this section is not prior art to the description and/or claims of this disclosure and is not admitted to be prior art by the mere inclusion in this section.

Currently, wireless communication networks or systems, such as Millimeter-Wave (MMW) wireless systems, operating at high frequencies from 30-300GHz, are emerging as a promising technology to meet exploding bandwidth requirements by enabling multi-Gb/s speeds. For example, the 5th Generation (5G) network is likely to be a combination of evolved the 3rd Generation (3G) technologies, the 4th Generation (4G) technologies and emerging or substantially new components such as Ultra-Density Network (UDN), which is also referred to as MMW Radio Access Technology (RAT). At such high frequencies, a large number of antennas can be available at a transmitter, a receiver, or both. In order to make up for the large propagation loss that typically occurs, beam-forming becomes a very important feature in MMW wireless systems.

Beam-forming is a signal processing technique used for directional signal transmission or reception. This is achieved by combining antenna elements in a phased array in such a way that signals at particular angles experience constructive interference while others experience destructive interference. Beam-forming can be used at both the transmitting and receiving ends in order to achieve spatial selectivity. The improvement compared with omnidirectional (simply "omni" for short) reception/transmission is known as a beam-forming gain.

When multiple antennas are available at transmitters, receivers or both, it is therefore important to apply efficient beam patterns to the antennas to better exploit the spatial selectivity of the corresponding wireless channel.

Typically, received power in a receiver side can be expressed as:

$$P_{rx} = P_{TX} \cdot G_{TX} \cdot G_{RX} (\frac{r}{4\pi\lambda})^2 \cdot e^{-\alpha r},$$

where $P_{TX}$ is transmitted power, $G_{TX}$ and $G_{RX}$ are gains of transmitting and receiving antennas, respectively, $\lambda$ is the wavelength, and $\alpha$ is the attenuation factor due to absorption in the medium. For an mm-wave link at 60 GHz, oxygen absorption loss can be as high as 16 dB/km.

From the above formula, it is clear that the attenuation of radio wave is proportional to $1/\lambda^2$. With the same propagation distance, 60 GHz attenuates 29.5 dB more compared to 2 GHz, without considering the oxygen absorption.

In considering this, high-gain beam-forming is mandatory in order to compensate the extra attenuation and achieve enough link gain. Thanks to the small wavelength, more antenna elements can be integrated in the antenna panel with the same size in both AN side and UE side. This makes it possible to reach a higher beam-forming gain for both transmitting (TX) beamforming and receiving (RX) beamforming.

Such MMW wireless communication networks generally cover a geographical area which is divided into areas, each cell area being served by an Access Node (AN) or a Base Station (BS), or an Access Point (AP), hereafter uniformly referred to as an AN. The MMW wireless communication networks may include a number of cells that can support communications for a number of UEs. Each UE in MMW wireless communication networks, e.g., a UE in a powering up state, an idle state or a connected state, would need to perform AN search to find an AN, like cell search in LTE.

AN search (also called as AN detection, network detection, AN discovery, and etc.) is similar with cell search in terms of concept. In general, AN search refers to detection of sync signal and decoding of system information. A beacon containing both sync signal and system information is important for AN search. That is, it is needed for a UE to detect a beacon of an AN, in order to find the AN.

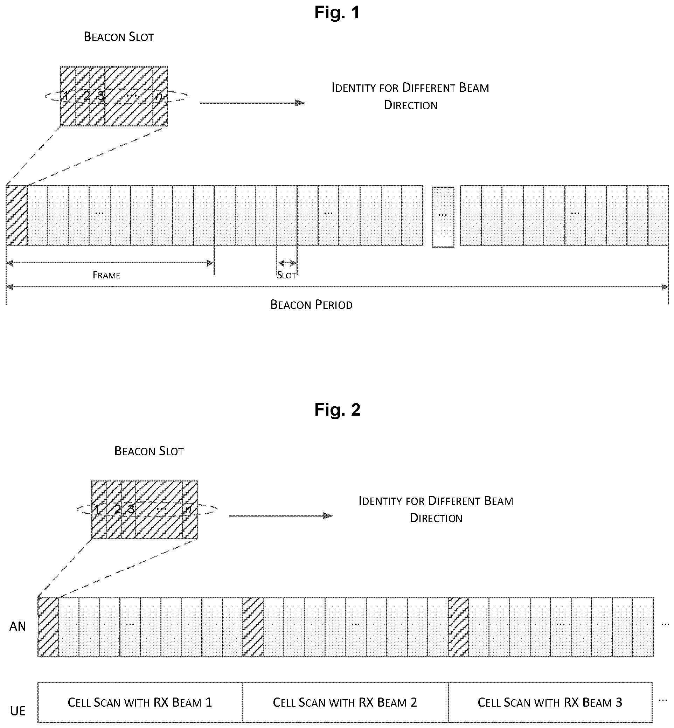

Fig. 1 illustrates a simplified frame structure for use in MMW wireless communication networks. As shown in Fig. 1, each frame consists of multiple slots which may be used for DownLink (DL) or UpLink (UL) transmissions. For example, N slots may be assumed for one frame, and the first X ones are used for DL transmissions while the last N-X slots are used for UL transmissions. Every slot is only scheduled for one UE's transmission and the scheduling is done every frame. A beacon period is defined as a transmission period of a beacon signal, which may have duration of multiple frames. At the beginning of each beacon period, there is one beacon slot which is broadcasted to indicate all other nodes to perform synchronization, channel estimation and basic information about this AN. Unlike the broadcast method in LTE systems, a beam sweeping method which can compensate the large path loss brought by high frequency is very likely to be employed to enhance the beacon coverage.

Based on the beacon transmission with TX beamforming, two straight forward solutions for AN search have been proposed. The first solution lies in omni or quasi-omni sweeping (search), with which signals from all directions can be received. In this case, the UE has to use a wide beam in order to receive beacon signals from unknown directions, so that complexity of searching a beacon signal is low. However, the RX beamforming gain for receiving a beacon signal is rather low. So, the coverage of a beacon signal without RX beamforming is relatively small compared to using narrow RX beams for MMW wireless communication networks. Moreover, in data service coverage, both transmitter and receiver are well trained, which means that both TX and RX beamforming gains can well achieved. Simply using omni or quasi-omni sweeping of a beacon signal can result in a much smaller beacon signal coverage than the data service coverage. This is not acceptable because it is expected that the coverage for beacon signal detection shall be at least as large as the data service coverage.

The second solution lies in RX beam sweeping that can only receive signals from one direction in one certain time period. Fig. 2 gives one example with m RX beams for such a second solution. As shown in Fig. 2, the UE can only perform AN search in one direction per time period. In such a solution, there can be maximum beamforming gain for beacon signal detection as well if the UE uses the narrowest RX beam width in beacon signal detection. The coverage for beacon signal detection can be improved at least as large as the data service coverage. However, the complexity for beacon signal detection is much higher than the first solution. Assuming there are $n$ beacon beams and $m$ RX beams, the complexity for beacon signal detection with the second solution may be expressed as $n * m$. For example, as shown in Fig. 2, if UE finds an AN when sweeping with RX beam $m$-1, it costs $m$ beacon periods (i.e., $n * m$ complexity) to find the AN. This leads to two problems: 1) the power consumption of UE can be increased especially for UE in idle mode; and 2) this will increase AN search delay. <page 4a>

SUMMARY

It is in view of the above considerations and others that the various embodiments of the present technology have been made. To be specific, aiming to at least some of the above defects, the present disclosure proposes a method for AN search.

According to a first aspect of the present disclosure, there is proposed a method used in a UE for AN search. The method includes: determining an initial receiving time-spatial sweeping pattern based on a current state of the UE; and performing AN search by using the initial receiving time-spatial sweeping pattern.

Determining the initial receiving time-spatial sweeping pattern based on the current state of the UE includes: determining one or more AN search requirements based on the current state of the UE; and selecting a receiving time-spatial sweeping pattern as the initial receiving time-spatial sweeping pattern from a predetermined receiving time-spatial sweeping pattern information table according to the determined one or more AN search requirements.

Determining one or more AN search requirements based on the current state of the UE includes: determining an AN search requirement as minimizing searching time if the UE is in a powering up state.

US 2008/198811 A1 discloses using different AN searching procedures (steps) corresponding to different states of the UE wherein different searching procedures bring different technical benefits. WO 2005/089362 A2 discloses a method for steering a smart antenna for a wireless local area networks using a periodic re-scan, in particular for steering smart antenna beams in a WLAN while more accurately taking into account the quality of the radio links.

Determining one or more AN search requirements based on the current state of the UE includes: determining an AN search requirement as minimizing searching time if the UE is in an idle state or connected state and Reference Signal Received Power (RSRP) of the UE is lower than a predetermined threshold; and determining an AN search requirement as minimizing power consumption for the UE, if the UE is in an idle state or connected state and RSRP of the UE is larger than or equal to the predetermined threshold.

Preferably, the method further includes: determining a new beam-forming gain according to a result of the AN search, if there is no a predetermined number of ANs found during a predetermined time period; selecting a new receiving time-spatial sweeping pattern from the predetermined receiving time-spatial sweeping pattern information table based on the determined new beam-forming gain; and performing AN search by using the new receiving time-spatial sweeping pattern.

Preferably, the predetermined receiving time-spatial sweeping pattern information table indicates correspondences between receiving time-spatial sweeping patterns and respective beam-forming gains, searching times, and power consumptions.

According to a second aspect of the present disclosure, there is proposed a UE for AN search.

According to a third aspect of the present disclosure, there is proposed a computer program product storing instructions that when executed, cause one or more computing devices to perform the method of the first aspect.

By performing AN search using a receiving time-spatial sweeping pattern, which may be adaptively determined based on the UE's current state, the present disclosure can reduce the UE power consumption and decrease AN search delay.

## BRIEF DESCRIPTION OF THE DRAWINGS

The foregoing and other features of this disclosure will become more fully apparent from the following description and appended claims, taken in conjunction with the accompanying drawings. Understanding that these drawings depict only several embodiments in accordance with the disclosure and are, therefore, not to be considered limiting of its scope, the disclosure will be described with additional specificity and detail through use of the accompanying drawings.

Fig. 1    illustrates a simplified frame structure for use in MMW wireless communication networks.
Fig. 2    illustrates an example with *m* RX beams for RX beam sweeping that can only receive signals from one direction in one certain time period.
Fig. 3    illustrates three receiving time-spatial sweeping pattern examples predefined at UE side.
Fig. 4    illustrates two receiving time-spatial sweeping pattern examples.
Fig. 5    a flowchart of a method 500 used in a UE for AN search according to embodiments of the present disclosure.
Fig. 6    shows an exemplary procedure of the method 500 according to embodiments of the present disclosure.
Fig. 7    is a schematic block diagram of a UE 700 according to the present disclosure.
Fig. 8    schematically shows an embodiment of an arrangement 800 which may be used in the UE 700.

## DETAILED DESCRIPTION OF EMBODIMENTS

Hereinafter, the present disclosure is described with reference to embodiments shown in the attached drawings. However, it is to be understood that those descriptions are just provided for illustrative purpose, rather than limiting the present disclosure. Further, in the following, descriptions of known structures and techniques are omitted so as not to unnecessarily obscure the concept of the present disclosure.

The present disclosure proposes to use multiple receiving time-spatial sweeping patterns (simply "RX patterns" for short) for performing AN search at UE side. To be specific, according to the present disclosure, multiple receiving time-spatial sweeping patterns are assumed at UE side, and then the UE may adaptively select one thereof according to its current state. Although the following descriptions mainly focus on AN search, it can be appreciated by those skilled in the art that the present disclosure is also applicable in an AN performing neighbor AN discovery if necessary.

The AN search may occur in one of the following cases:

- The UE in a powering up state needs to perform AN search to find ANs around;

- The UE in an idle state needs to perform AN search first and then measure RSRP for AN reselection; and

- The UE in a connected state and configured to perform neighbor AN measurement needs to perform AN search first.

Multiple receiving time-spatial sweeping patterns can be predefined at UE side according to its radio configurations, e.g., the number of antennas and the number of RX Radio Frequency (RF) chains.

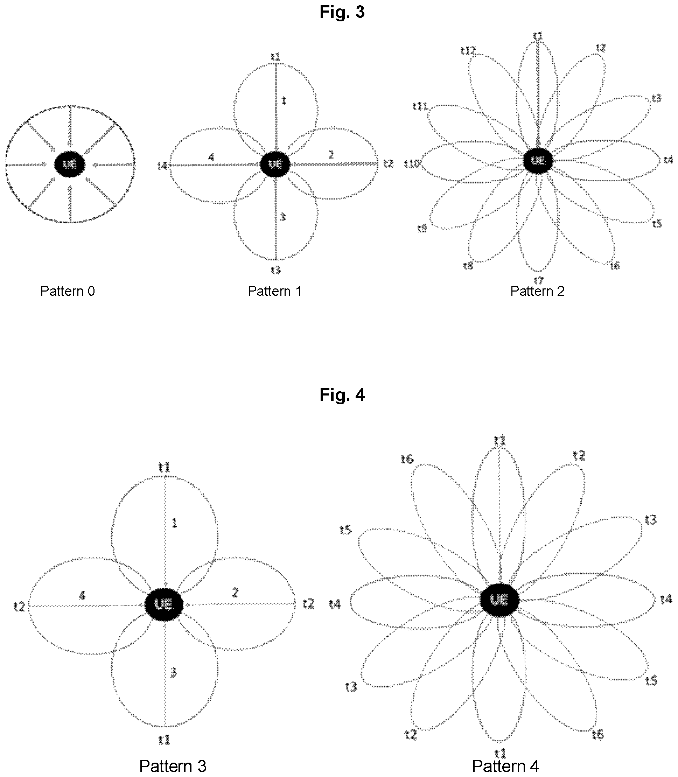

Fig. 3 illustrates three receiving time-spatial sweeping pattern examples predefined at UE side, i.e., Pattern 0, Pattern 1, and Pattern 2.

Pattern 0 is generally used as a baseline AN search pattern and corresponds to omni or quasi-omni antenna. Naturally, Pattern 0 may be applied in omni or quasi-omni sweeping.

Pattern 1 and Pattern 2 belong to a case, where only one digital RX RF chain is available at UE side, which means one beam direction at the same time. As shown in Fig. 3, Pattern 1 can only receive one beam at the same time point, e.g., only beam 1 at time t1. Pattern 2 can use more antennas than Pattern 1 and thus has a larger beamforming gain compared to Pattern 1.

Fig. 4 illustrates two receiving time-spatial sweeping pattern examples, i.e., Pattern 3 and Pattern 4, by using two digital RX RF chains, which means two different beam directions at the same time.

In a case of two digital RX RF chains, the UE can receive signals from two different beam directions simultaneously. For example, the UE may receive beam 1 and beam 3 simultaneously at time t1 for Pattern 3 as shown in Fig. 4. Due to processing for one additional RX RF chain, it will consume more UE power compared to using one RX chain only.

It can be appreciated by those skilled in the art that Fig. 3 and Fig. 4 merely illustrate several exemplary patterns, and other RX patterns can also be applicable in the present disclosure.

At UE side, these RX patterns, such as Patterns 0-2 in Fig. 3 and Patterns 3-4 in Fig. 4, may be maintained in a table together with respective performance information. One example table is given in Table 1.

Table 1: RX pattern information table

| Pattern No. | Beamforming gain | Average searching time | Average battery power consuming |
|---|---|---|---|
| Pattern 0 (baseline) | 1 | 1 | 1 |
| Pattern 1 | 5 | 2.5 | 1.5 |
| Pattern 2 | 20 | 6.5 | 1.75 |
| Pattern 3 | 5 | 1.5 | 2.5 |
| Pattern 4 | 20 | 3.5 | 2.75 |

Numerical values in Table 1 may be empirical values or may be preconfigured at UE aide. For example, the table can be predefined by the UE's manufacturer according to its supporting radio configuration, e.g., determining what kinds of RX patterns can be used and for each pattern how to use the available antennas and RF chains. Then, the RX beamforming gain can be roughly estimated and keep unchanged. Assuming that a transmitter may be located in every direction with the same possibility, the mean searching time and battery power consuming can be calculated or tested for each pattern. It should be noted that "average" here means that it is calculated for all possible transmitter directions not for a specific one.

Finally, relative performance compared to baseline pattern can be stored in the table for further RX pattern. That is, numerical values in Table 1 are relevant values compared to Pattern 0.

It shall be appreciated that the above RX patterns and Table 1 are merely for illustration, and any other appropriate RX patterns and information tables may be applicable in the present disclosure only if they are known at UE side.

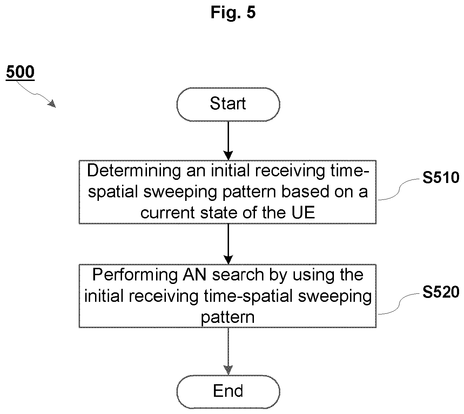

Fig. 5 shows a flowchart of a method 500 used in a UE for AN search according to embodiments of the present disclosure.

At step S510, the UE determines an initial receiving time-spatial sweeping pattern based on a current state of the UE. For example, the current state of the UE may be a powering up state, an idle state, or a connected state.

The UE may determine the initial receiving time-spatial sweeping pattern based on a predetermined configuration. As an example, the UE determines the initial receiving time-spatial sweeping pattern as Pattern 0 if the UE is currently in an idle state. As another example, the UE determines the initial receiving time-spatial sweeping pattern as Pattern 3 if the UE is currently in a powering up state. As a further example, the UE determines the initial receiving time-spatial sweeping pattern as Pattern 1 if the UE is currently in a connected state.

The UE may determine the initial receiving time-spatial sweeping pattern based on a relationship table between the state and the pattern. In a preferred example, UE may determine the initial receiving time-spatial sweeping pattern based on a relationship table between the requirements of different states and the pattern. For example, step S510 may include determining one or more AN search requirements based on the current state of the UE; and selecting a receiving time-spatial sweeping pattern as the initial receiving time-spatial sweeping pattern from a predetermined receiving time-spatial sweeping pattern information table according to the determined one or more AN search requirements. For example, the predetermined receiving time-spatial sweeping pattern information table here indicates correspondences between receiving time-spatial sweeping patterns and respective beam-forming gains, searching times, and power consumptions, as shown in Table 1.

As a non-limiting example, determining one or more AN search requirements based on the current state of the UE includes: determining an AN search requirement as minimizing searching time if the UE is in a powering up state.

As another non-limiting example, determining one or more AN search requirements based on the current state of the UE includes: determining an AN search requirement as minimizing searching time if the UE is in an idle state or connected state and RSRP of the UE is lower than a predetermined threshold; and determining an AN search requirement as minimizing power consumption for the UE, if the UE is in an idle state or connected state and RSRP of the UE is larger than or equal to the predetermined threshold.

In an implementation, the initial receiving time-spatial sweeping pattern may be a default one and may be constant before the UE's current state changes. For example, once the UE is in an idle state, the receiving time-spatial sweeping pattern of the UE is always set as Pattern 0.

In another implementation, the initial receiving time-spatial sweeping pattern may be determined as one that is used to successfully detect an AN or a predetermined number of ANs last time.

At step S520, the UE performs AN search by using the initial receiving time-spatial sweeping pattern.

In yet another implementation, the method 500 further includes: determining a new beam-forming gain according to a result of the AN search, if there is no a predetermined number of ANs found during a predetermined time period; selecting a new receiving time-spatial sweeping pattern from the predetermined receiving time-spatial sweeping pattern information table based on the determined new beam-forming gain; and performing AN search by using the new receiving time-spatial sweeping pattern.

One major advantage with the method 500 is that the UE's power consumption and AN search delay can be reduced due to adaptive RX pattern selection for AN search. Especially for UEs near an AN, the searching time and complexity can be largely reduced. For example in an extreme case, one UE is very near the AN, i.e., being cell-center UE. Due to direction of RX beamforming, the UE can only detect sync signal with RX beam $m$. So, by using the second solution in BACKGROUND, time for successful detection is $m*T,$ where $T$ is beacon period and complexity is $n*m.$ However, according to the present disclosure, the RX pattern can be adapted to be omni-RX pattern (i.e., Pattern 0 as shown in Fig. 3), then the searching time will be reduced to $T$ and complexity is $n$.

Furthermore, as the method 500 is carried out at UE side, the present disclosure can enable each AN to have larger control signaling coverage.

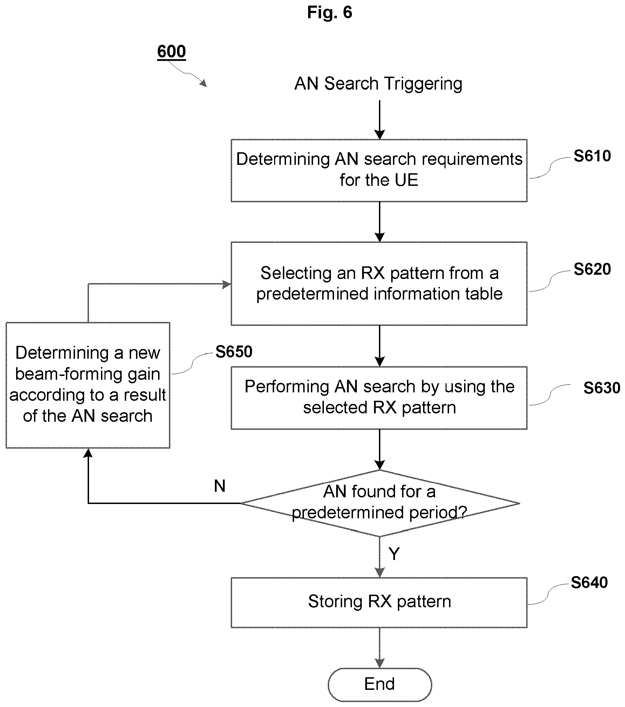

Fig. 6 shows an exemplary procedure of the method 500 according to embodiments of the present disclosure.

As shown in Fig. 6, the method 600 begins upon AN search triggering, e.g., the UE in a powering up state needs to perform AN search to find ANs around, the UE in an idle state needs to perform AN search first and then measure RSRP for AN reselection, or the UE in a connected state makes neighbor AN measurement needs to perform AN search first.

At step S610, the UE determines one or more AN search requirements based on the current state of the UE.

For example, for UE in a powering up state, the top prior requirement is searching time, i.e., to minimize time duration from start of AN search to successful AN detection. In this example, one feasible RX pattern with full use of hardware resource can be set as a default RX pattern. For such a UE, it gets no knowledge about how far away is the nearest AN. If Pattern 0 is used, it may not be able to detect any AN and thus waste lots of time. So it is better to select one RX pattern that makes full use of all RX RF chains with the minimum searching time. Taking Table 1 as example, Pattern 3 may be a better candidate.

For UE in an idle state, AN search shall be processed so that the UE can be camped on a good enough AN. In such case, it is not mandatory that the UE is always camped on the best AN or sector, and it depends on different situations. Here, two thresholds can be defined: Thres_bad indicates a detected quality (e.g., RSRP) with the selected pattern is too bad, while Thres_good indicates the detected quality with the selected pattern is too good. When the detected quality is below Thres_bad, an RX pattern with higher RX beamforming gain shall be selected in order to avoid the risk that the UE cannot find a good enough AN. When the detected quality is higher than Thres_good, an RX pattern with lower RX beamforming gain shall be selected to reduce power consumption for AN search.

For UE in a connected state, it has similar requirements with the UE in an idle state. The difference is that UE may get more UE-specific information from connected ANs. Thus, it is possible that serving AN provides aided information for UE's AN search. With aided information such as position of neighboring AN, direction and path loss etc., serving AN estimates the needed beamforming gain to detect one certain neighbor AN for the connected UE. Then, this information will be transmitted to the UE via signaling. With this aided information, the UE will select one RX pattern whose beam-forming gain is above that of the initial direction and orders to process AN search with the selected RX pattern. If aiding information from AN is not available, a similar AN search method as that in an idle state can be used.

As a non-limiting example, determining one or more AN search requirements based on the current state of the UE includes: determining an AN search requirement as minimizing searching time if the UE is in a powering up state.

As another non-limiting example, determining one or more AN search requirements based on the current state of the UE includes: determining an AN search requirement as minimizing searching time if the UE is in an idle state or connected state and RSRP of the UE is lower than a predetermined threshold; and determining an AN search requirement as minimizing power consumption for the UE, if the UE is in an idle state or connected state and RSRP of the UE is larger than or equal to the predetermined threshold.

At step S620, the UE selects a receiving time-spatial sweeping pattern as the initial receiving time-spatial sweeping pattern from a predetermined receiving time-spatial sweeping pattern information table, e.g., Table 1, according to the determined one or more AN search requirements.

At step S630, the UE performs AN search by using the selected receiving time-spatial sweeping pattern.

If there is a predetermined number of ANs found during a predetermined time period, the method 600 further includes a step of storing the receiving time-spatial sweeping pattern (step S640). In an example, the receiving time-spatial sweeping pattern may be used for a next round AN search. It should be noted that the predetermined number of ANs include one or more ANs.

If there is no a predetermined number of ANs found during a predetermined time period, i.e., the previous AN search fails, the UE determines a new beam-forming gain according to a result of the AN search (step S650). For example, the UE may estimate how much more gain is needed according to the previous AN search result, e.g., estimating a difference between the correlation results of sync signal and thresholds to determine the AN detection.

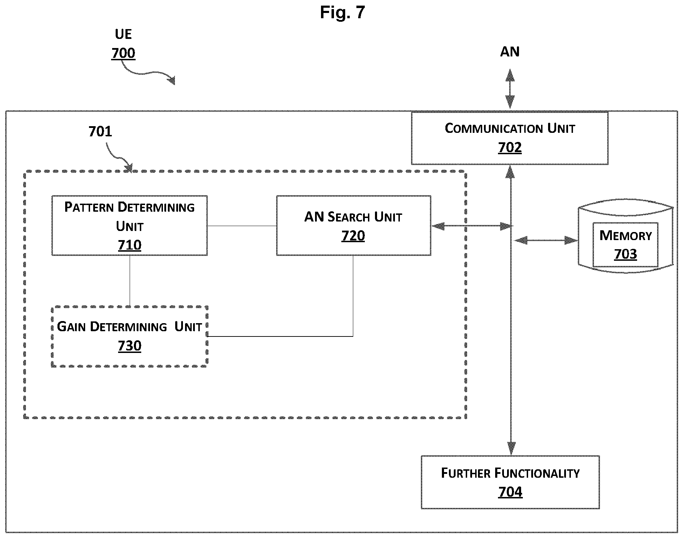

Then, the method 600 returns to step S620 of selecting a new receiving time-spatial sweeping pattern from the predetermined receiving time-spatial sweeping pattern information table based on the determined new beam-forming gain. Thereafter, the UE performs AN search by using the new receiving time-spatial sweeping pattern (step S630). The method 600 circulates in this way. Fig. 7 is a schematic block diagram of a UE 700 according to the present disclosure.

The part of UE 700 which is most affected by the adaptation to the herein described method, e.g., the method 500 or 600, is illustrated as an arrangement 701, surrounded by a dashed line. The UE 700 could be, e.g., a mobile terminal, depending on in which type of communication system it is operable, e.g., MMW-type systems. The UE 700 and arrangement 701 are may be further configured to communicate with other entities via a communication unit 702 which may be regarded as part of the arrangement 701. The communication unit 702 comprises means for wireless communication. The arrangement 701 or UE 700 may further comprise other functional units 704, such as functional units providing regular UE functions, and may further comprise one or more storage units 703.

The arrangement 701 could be implemented, e.g., by one or more of: a processor or a micro-processor and adequate software and memory for storing of the software, a Programmable Logic Device (PLD) or other electronic component(s) or processing circuitry configured to perform the actions described above, and illustrated, e.g., in Fig. 5 or Fig. 6. The arrangement part of the UE 700 may be implemented and/or described as follows.

Referring to Fig. 7, UE 700 may include a pattern determining unit 710, an AN search unit 720, and a gain determining unit 730. The gain determining unit 730 is optional.

The pattern determining unit 710 is configured to determine an initial receiving time-spatial sweeping pattern based on a current state of the UE.

The AN search unit 720 is configured to perform AN search by using the initial receiving time-spatial sweeping pattern.

In an implementation, the pattern determining unit 710 is configured to: determine one or more AN search requirements based on the current state of the UE; and select a receiving time-spatial sweeping pattern as the initial receiving time-spatial sweeping pattern from a predetermined receiving time-spatial sweeping pattern information table according to the determined one or more AN search requirements.

As an example, determining one or more AN search requirements based on the current state of the UE includes: determining an AN search requirement as minimizing searching time if the UE is in a powering up state.

As another example, determining one or more AN search requirements based on the current state of the UE includes: determining an AN search requirement as minimizing searching time if the UE is in an idle/ connected state and RSRP of the UE is lower than a predetermined threshold; and determining an AN search requirement as minimizing power consumption for the UE, if the UE is in an idle/ connected state and RSRP of the UE is larger than or equal to the predetermined threshold.

The gain determining unit 730 is configured to determining a new beam-forming gain according to a result of the AN search, if there is no a predetermined number of ANs found during a predetermined time period. The pattern determining unit 710 is further configured to select a new receiving time-spatial sweeping pattern from the predetermined receiving time-spatial sweeping pattern information table based on the determined new beam-forming gain. The AN search unit 720 is further configured to perform AN search by using the new receiving time-spatial sweeping pattern. For example, the predetermined receiving time-spatial sweeping pattern information table indicates correspondences between receiving time-spatial sweeping patterns and respective beam-forming gains, searching times, and power consumptions.

It should be noted that two or more different units in this disclosure may be logically or physically combined. For example, the pattern determining unit 710 and the gain determining unit 730 may be combined as one single unit.

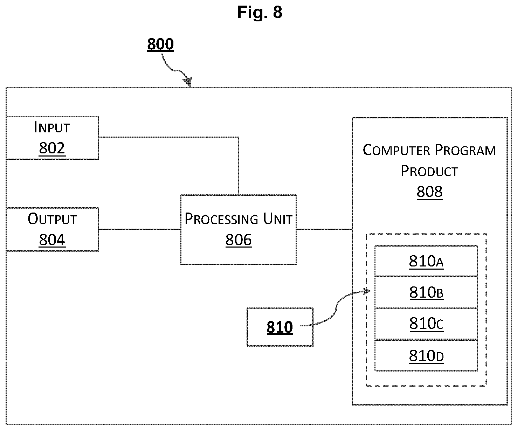

Fig. 8 schematically shows an embodiment of an arrangement 800 which may be used in the UE 700. Comprised in the arrangement 800 are here a processing unit 806, e.g., with a Digital Signal Processor (DSP). The processing unit 806 may be a single unit or a plurality of units to perform different actions of procedures described herein. The arrangement 800 may also comprise an input unit 802 for receiving signals from other entities, and an output unit 804 for providing signal(s) to other entities. The input unit and the output unit may be arranged as an integrated entity or as illustrated in the example of Fig. 7.

Furthermore, the arrangement 800 may comprise at least one computer program product 808 in the form of a non-volatile or volatile memory, e.g., an Electrically Erasable Programmable Read-Only Memory (EEPROM), a flash memory and a hard drive. The computer program product 808 comprises a computer program 810, which comprises code/computer readable instructions, which when executed by the processing unit 806 in the arrangement 800 causes the arrangement 800 and/or the UE in which it is comprised to perform the actions, e.g., of the procedure described earlier in conjunction with Fig. 5 or Fig. 6.

The computer program 810 may be configured as a computer program code structured in computer program modules 810A - 810D.

Hence, in an exemplifying embodiment when the arrangement 800 is used in the UE 700, the code in the computer program of the arrangement 800 includes a pattern determining module 810A for determining an initial receiving time-spatial sweeping pattern based on a current state of the UE. The code in the computer program 810 further includes an AN search unit 810B for performing AN search by using the initial receiving time-spatial sweeping pattern. The code in the computer program 810 further includes a gain determining unit 810C for determining a new beam-forming gain according to a result of the AN search, if there is no a predetermined number of ANs found during a predetermined time period. The code in the computer program 810 may comprise further modules, illustrated as module 810D, e.g. for controlling and performing other related procedures associated with UE's operations.

The computer program modules could essentially perform the actions of the flow illustrated in Fig. 5 or Fig. 6, to emulate the arrangement 701 in the UE 700. In other words, when the different computer program modules are executed in the processing unit 806, they may correspond, e.g., to the units 710 - 730 of Fig. 7.

Although the code means in the embodiments disclosed above in conjunction with Fig. 8 are implemented as computer program modules which when executed in the processing unit causes the device to perform the actions described above in conjunction with the figures mentioned above, at least one of the code means may in alternative embodiments be implemented at least partly as hardware circuits.

The processor may be a single CPU (Central processing unit), but could also comprise two or more processing units. For example, the processor may include general purpose microprocessors; instruction set processors and/or related chips sets and/or special purpose microprocessors such as Application Specific Integrated Circuit (ASICs). The processor may also comprise board memory for caching purposes. The computer program may be carried by a computer program product connected to the processor. The computer program product may comprise a computer readable medium on which the computer program is stored. For example, the computer program product may be a flash memory, a Random-access memory (RAM), a Read-Only Memory (ROM), or an EEPROM, and the computer program modules described above could in alternative embodiments be distributed on different computer program products in the form of memories within the UE.

The present disclosure is described above with reference to the embodiments thereof. However, those embodiments are provided just for illustrative purpose, rather than limiting the present disclosure. The scope of the disclosure is defined by the attached claims. Those skilled in the art can make various alternations and modifications without departing from the scope of the disclosure, which all fall into the scope of the disclosure.

**Claims**

1. A method (500) used in a User Equipment (UE) for Access Node (AN) search, the method including:
determining (S510) an initial receiving time-spatial sweeping pattern based on a current state of the UE, which comprises:

   determining (S510) one or more AN search requirements based on the current state of the UE, wherein determining (S510) one or more AN search requirements based on the current state of the UE is **characterized by**:

      determining an AN search requirement as minimizing searching time if the UE is in a powering up state; determining an AN search requirement as minimizing searching time if the UE is in an idle state or connected state and Reference Signal Received Power (RSRP) of the UE is lower than a predetermined threshold; and determining an AN search requirement as minimizing power consumption for the UE, if the UE is in an idle state or connected state and RSRP of the UE is larger than or equal to the predetermined threshold;

   and selecting a receiving time-spatial sweeping pattern as the initial receiving time-spatial sweeping pattern from a predetermined receiving time-spatial sweeping pattern information table according to the determined one or more AN search requirements; and
   performing AN search (S520) by using the initial receiving time-spatial sweeping pattern.

2. The method (500) according to claim 1, wherein the method further comprises:

   determining (S650) a new beam-forming gain according to a result of the AN search, if there is no a predetermined number of ANs found during a predetermined time period;
   selecting (S620) a new receiving time-spatial sweeping pattern from the predetermined receiving time-spatial sweeping pattern information table based on the determined new beam-forming gain;
   performing (S630) AN search by using the new receiving time-spatial sweeping pattern.

3. The method (500) according to any of claims 1 to 2, the predetermined receiving time-spatial sweeping pattern information table indicates correspondences between receiving time-spatial sweeping patterns and respective beam-forming gains, searching times, and power consumptions.

4. A User Equipment (UE) (700) for Access Node (AN) search, the UE including:

a pattern determining unit (710) configured to determine an initial receiving time-spatial sweeping pattern based on a current state of the UE;
to determine one or more AN search requirements based on the current state of the UE, wherein to determine one or more AN search requirements based on the current state of the UE is **characterized by**:

determine an AN search requirement as minimizing searching time if the UE is in a powering up state;
determine an AN search requirement as minimizing searching time if the UE is in an idle/connected state and Reference Signal Received Power (RSRP) of the UE is lower than a predetermined threshold; and
determine an AN search requirement as minimizing power consumption for the UE, if the UE is in an idle/connected state and RSRP of the UE is larger than or equal to the predetermined threshold;

and to select a receiving time-spatial sweeping pattern as the initial receiving time-spatial sweeping pattern from a predetermined receiving time-spatial sweeping pattern information table according to the determined one or more AN search requirements; and
an AN search unit (720) configured to perform AN search by using the initial receiving time-spatial sweeping pattern.

5. The UE (700) according toclaim 4, wherein the UE further comprises:

a gain determining unit (730) configured to determine a new beam-forming gain according to a result of the AN search, if there is no a predetermined number of ANs found during a predetermined time period,
the pattern determining unit (710) is further configured to select a new receiving time-spatial sweeping pattern from the predetermined receiving time-spatial sweeping pattern information table based on the determined new beam-forminggain, and
the AN search unit (720) is further configured to perform AN search by using the new receiving time-spatial sweeping pattern.

6. The UE (700) according to any of claims 4 to 5, wherein the receiving receiving time-spatial sweeping pattern information table indicates correspondences between receiving time-spatial sweeping patterns and respective beam-forming gains, searching times, and power consumptions.

7. A computer program product (808) storing instructions (810) that when executed, cause one or more computing devices to perform the method of any of claims 1-3.

**Patentansprüche**

1. Verfahren (500), das in einer Benutzereinrichtung (UE) zur Zugangsknotensuche (AN-Suche) verwendet wird, wobei das Verfahren einschließt:
Bestimmen (S510) eines initialen empfangenden zeitlich-räumlichen Schwenkmusters basierend auf einem aktuellen Zustand der UE, umfassend:
Bestimmen (S510) einer oder mehrerer AN-Suchanforderungen basierend auf dem aktuellen Zustand der UE, wobei das Bestimmen (S510) einer oder mehrerer AN-Suchanforderungen basierend auf dem aktuellen Zustand der UE **gekennzeichnet ist durch:**

Bestimmen einer AN-Suchanforderung zum Minimieren der Suchzeit, wenn sich die UE in einem Zustand des Hochfahrens befindet;
Bestimmen einer AN-Suchanforderung zum Minimieren der Suchzeit, wenn sich die UE in einem Ruhezustand oder verbundenen Zustand befindet und die Referenzsignal-Empfangsleistung (RSRP) der UE geringer als ein vorbestimmter Schwellenwert ist;
und Bestimmen einer AN-Suchanforderung zum Minimieren des Stromverbrauchs für die UE, wenn die UE sich in einem Ruhezustand oder verbundenen Zustand befindet und die RSRP der UE größer oder gleich dem vorbestimmten Schwellenwert ist;
und Auswählen eines empfangenden zeitlich-räumlichen Schwenkmusters als das initiale empfangende zeitlich-räumliche Schwenkmuster aus einer vorbestimmten Informationstabelle für empfangende zeitlich-räumliche Schwenkmuster gemäß der bestimmten einen oder mehreren AN-Suchanforderungen; und
Durchführen einer AN-Suche (S520) unter Verwendung des initialen empfangenden zeitlich-räumlichen Schwenkmusters.

2. Verfahren (500) nach Anspruch 1, wobei das Verfahren ferner umfasst:

Bestimmen (S650) einer neuen Strahlformungsverstärkung gemäß einem Ergebnis der AN-Suche, wenn während einer vorbestimmten Zeitdauer keine vorbestimmte Anzahl von ANs gefunden wird;
Auswählen (S620) eines neuen empfangenden zeitlich-räumlichen Schwenkmusters aus der vorbestimmten Informationstabelle für empfangende zeitlich-räumliche Schwenkmuster basierend auf der bestimmten neuen Strahlformungsverstärkung;
Durchführen (S630) einer AN-Suche unter Verwendung des neuen empfangenden zeitlich-räumlichen Schwenkmusters.

3. Verfahren (500) nach einem der Ansprüche 1 bis 2, wobei die vorbestimmte Informationstabelle für empfangende zeitlich-räumliche Schwenkmuster Korrespondenzen zwischen empfangenden zeitlich-räumlichen Schwenkmustern und entsprechenden Strahlformungsverstärkungen, Suchzeiten und Stromverbräuchen anzeigt.

4. Benutzereinrichtung (UE) (700) für die Zugangsknotensuche (AN-Suche), wobei die UE einschließt:

eine Musterbestimmungseinheit (710), die konfiguriert ist zum Bestimmen eines empfangenden zeitlich-räumlichen Schwenkmusters basierend auf einem aktuellen Zustand der UE;
Bestimmen einer oder mehrerer AN-Suchanforderungen basierend auf dem aktuellen Zustand der UE, wobei das Bestimmen einer oder mehrerer AN-Suchanforderungen basierend auf dem aktuellen Zustand der UE **gekennzeichnet ist durch:**

Bestimmen einer AN-Suchanforderung zum Minimieren der Suchzeit, wenn sich die UE in einem Zustand des Hochfahrens befindet;
Bestimmen einer AN-Suchanforderung zum Minimieren der Suchzeit, wenn sich die UE in einem Ruhe-/verbundenen Zustand befindet und die Referenzsignal-Empfangsleistung (RSRP) der UE geringer als ein vorbestimmter Schwellenwert ist;
und Bestimmen einer AN-Suchanforderung zum Minimieren des Stromverbrauchs für die UE, wenn sich die UE in einem Ruhe-/verbundenen Zustand befindet und die RSRP der UE größer oder gleich dem vorbestimmten Schwellenwert ist;
und Auswählen eines empfangenden zeitlich-räumlichen Schwenkmusters als das initiale empfangende zeitlich-räumliche Schwenkmuster aus einer vorbestimmten Informationstabelle für empfangende zeitlich-räumliche Schwenkmuster gemäß der bestimmten einen oder mehreren AN-Suchanforderungen; und
eine AN-Sucheinheit (720), die konfiguriert ist, eine AN-Suche unter Verwendung des initialen empfangenden zeitlich-räumlichen Schwenkmusters durchzuführen.

5. UE (700) nach Anspruch 4, wobei die UE ferner umfasst:

eine Strahlformungsverstärkungseinheit (730), die konfiguriert ist, um gemäß einem Ergebnis der AN-Suche eine neue Strahlformungsverstärkung zu bestimmen, wenn während einer vorbestimmten Zeitdauer keine vorbestimmte Anzahl von ANs gefunden wird;
die Musterbestimmungseinheit (710) ist ferner konfiguriert, um ein neues empfangendes zeitlich-räumliches Schwenkmuster aus der vorbestimmten Informationstabelle für empfangende zeitlich-räumliche Schwenkmuster basierend auf der bestimmten neuen Strahlformungsverstärkung auszuwählen; und
die AN-Sucheinheit (720) ist ferner konfiguriert, um eine AN-Suche unter Verwendung des neuen empfangenden zeitlich-räumlichen Schwenkmusters durchzuführen.

6. UE (700) nach einem der Ansprüche 4 bis 5, wobei die Informationstabelle für empfangende zeitlich-räumliche Schwenkmuster Korrespondenzen zwischen empfangenden zeitlich-räumlichen Schwenkmustern und entsprechenden Strahlformungsverstärkungen, Suchzeiten und Stromverbräuchen anzeigt.

7. Computerprogrammprodukt (808), das Befehle (810) speichert, die, wenn sie ausgeführt werden, eine oder mehrere Computervorrichtungen veranlassen, das Verfahren nach einem der Ansprüche 1 bis 3 durchzuführen.

**Revendications**

1. Procédé (500) utilisé dans un équipement utilisateur (UE) pour une recherche de nœud d'accès (AN), le procédé incluant :

   la détermination (S510) d'un motif initial de balayage spatio-temporel de réception sur la base d'un état actuel de l'UE, qui comprend :

   la détermination (S510) d'une ou plusieurs exigences de recherche d'AN sur la base de l'état actuel de l'UE, dans lequel la détermination (S510) d'une ou plusieurs exigences de recherche d'AN sur la base de l'état actuel de l'UE, est **caractérisée par** :

   la détermination d'une exigence de recherche d'AN comme minimisant le temps de recherche si l'UE est dans un état de mise sous tension ;
   la détermination d'une exigence de recherche d'AN comme minimisant le temps de recherche si l'UE est dans un état inactif ou un état connecté et que la puissance reçue de signal de référence (RSRP) de l'UE est inférieure à un seuil prédéterminé ;
   et la détermination d'une exigence de recherche d'AN comme minimisant la consommation d'énergie pour l'UE, si l'UE est dans un état inactif ou un état connecté et que la RSRP de l'UE est supérieure ou égale au seuil prédéterminé ;
   et la sélection d'un motif de balayage spatio-temporel de réception en guise de motif initial de balayage spatio-temporel de réception à partir d'une table d'informations de motif de balayage spatio-temporel de réception prédéterminée selon la ou les exigences de recherche d'AN déterminées ; et la mise en œuvre d'une recherche d'AN (S520) en utilisant le motif initial de balayage spatio-temporel de réception.

2. Procédé (500) selon la revendication 1, dans lequel le procédé comprend en outre :

   la détermination (S650) d'un nouveau gain de formation de faisceau selon un résultat de la recherche d'AN, s'il n'y a pas un nombre prédéterminé d'AN trouvés pendant une période de temps prédéterminée ;
   la sélection (S620) d'un nouveau motif de balayage spatio-temporel de réception à partir de la table d'informations de motif de balayage spatio-temporel de réception prédéterminée sur la base du nouveau gain de formation de faisceau déterminé ;
   la mise en œuvre (S630) d'une recherche d'AN en utilisant le nouveau motif de balayage spatio-temporel de réception.

3. Procédé (500) selon l'une quelconque des revendications 1 à 2, la table d'informations de motif de balayage spatio-temporel de réception prédéterminée indique des correspondances entre des motifs de balayage spatio-temporel de réception et des gains de formation de faisceau, temps de recherche et consommations d'énergie, respectifs.

4. Équipement utilisateur (UE) (700) pour une recherche de nœud d'accès (AN), l'UE incluant :

   une unité de détermination de motif (710) configurée pour déterminer un motif initial de balayage spatio-temporel de réception sur la base d'un état actuel de l'UE ;
   pour déterminer une ou plusieurs exigences de recherche d'AN sur la base de l'état actuel de l'UE, dans lequel le fait de déterminer une ou plusieurs exigences de recherche d'AN sur la base de l'état actuel de l'UE est **caractérisé par** :

   déterminer une exigence de recherche d'AN comme minimisant le temps de recherche si l'UE est dans un état de mise sous tension ;
   déterminer une exigence de recherche d'AN comme minimisant le temps de recherche si l'UE est dans un état inactif ou un état connecté et que la puissance reçue de signal de référence (RSRP) de l'UE est inférieure à un seuil prédéterminé ;
   et déterminer une exigence de recherche d'AN comme minimisant la consommation d'énergie
   pour l'UE, si l'UE est dans un état inactif/connecté et que la RSRP de l'UE est supérieure ou égale au seuil prédéterminé ;
   et pour sélectionner un motif de balayage spatio-temporel de réception en guise de motif initial de balayage spatio-temporel de réception à partir d'une table d'informations de motif de balayage spatio-temporel de réception prédéterminée selon la ou les exigences de recherche d'AN déterminées ; et une unité de recherche d'AN (720) configurée pour mettre en œuvre une recherche d'AN en utilisant le motif initial de balayage spatio-temporel de réception.

**5.** UE (700) selon la revendication 4, dans lequel l'UE comprend en outre :

une unité de détermination de gain (730) configurée pour déterminer un nouveau gain de formation de faisceau selon un résultat de la recherche d'AN, s'il n'y a pas un nombre prédéterminé d'AN trouvés pendant une période de temps prédéterminée,
l'unité de détermination de motif (710) est en outre configurée pour sélectionner un nouveau motif de balayage spatio-temporel de réception à partir de la table d'informations de motif de balayage spatio-temporel de réception prédéterminée sur la base du nouveau gain de formation de faisceau déterminé, et
l'unité de recherche d'AN (720) est en outre configurée pour mettre en œuvre une recherche d'AN en utilisant le nouveau motif de balayage spatio-temporel de réception.

**6.** UE (700) selon l'une quelconque des revendications 4 à 5, dans lequel la table d'informations de motif de balayage spatio-temporel de réception indique des correspondances entre des motifs de balayage spatio-temporel de réception et des gains de formation de faisceau, temps de recherche et consommations d'énergie, respectifs.

**7.** Produit programme informatique (808) stockant des instructions (810) qui lorsqu'elles sont exécutées, amènent un ou plusieurs dispositifs informatiques à mettre en œuvre le procédé selon l'une quelconque des revendications 1 à 3.

**Fig. 1**

BEACON SLOT

1 2 3 ... n

IDENTITY FOR DIFFERENT BEAM
DIRECTION

... ... ... ...

FRAME

SLOT

BEACON PERIOD

**Fig. 2**

BEACON SLOT

1 2 3 ... n

IDENTITY FOR DIFFERENT BEAM
DIRECTION

AN ... ... ... ...

UE

| CELL SCAN WITH RX BEAM 1 | CELL SCAN WITH RX BEAM 2 | CELL SCAN WITH RX BEAM 3 | ... |

**Fig. 3**

Pattern 0

Pattern 1

Pattern 2

**Fig. 4**

Pattern 3

Pattern 4

**Fig. 5**

500

```
        ┌─────────────┐
        │    Start     │
        └──────┬──────┘
               │
               ▼
┌──────────────────────────────────┐
│ Determining an initial receiving time-│─── S510
│ spatial sweeping pattern based on a  │
│     current state of the UE          │
└──────────────┬───────────────────┘
               │
               ▼
┌──────────────────────────────────┐
│ Performing AN search by using the    │─── S520
│ initial receiving time-spatial sweeping│
│            pattern                    │
└──────────────┬───────────────────┘
               │
               ▼
        ┌─────────────┐
        │     End      │
        └─────────────┘
```

**Fig. 6**

<u>600</u>

AN Search Triggering

Determining AN search requirements for the UE — S610

Selecting an RX pattern from a predetermined information table — S620

Determining a new beam-forming gain according to a result of the AN search — S650

Performing AN search by using the selected RX pattern — S630

N ← AN found for a predetermined period?

Y

Storing RX pattern — S640

End

# Fig. 7

UE
**700**

AN

701

COMMUNICATION UNIT
**702**

PATTERN DETERMINING
UNIT
**710**

AN SEARCH UNIT
**720**

MEMORY
**703**

GAIN DETERMINING UNIT
**730**

FURTHER FUNCTIONALITY
**704**

**Fig. 8**

<u>**800**</u>

INPUT
<u>802</u>

OUTPUT
<u>804</u>

PROCESSING UNIT
<u>806</u>

COMPUTER PROGRAM
PRODUCT
<u>808</u>

<u>810A</u>

<u>810B</u>

<u>810C</u>

<u>810D</u>

<u>**810**</u>

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008198811 A1
- WO 2005089362 A2